# EUROPEAN PATENT SPECIFICATION

(11) **EP 3 466 757 B1**
(45) Date of publication and mention of the grant of the patent: **15.09.2021**
(21) Application number: 17806327.7
(22) Date of filing: 11.05.2017
(51) Int. Cl.: H05B 45/58, B60Q 1/00, B60Q 1/34, B60Q 1/38

(54) **LAMP LIGHTING SYSTEM AND LAMP UNIT**
LAMPENBELEUCHTUNGSSYSTEM UND LAMPENEINHEIT
SYSTÈME D'ÉCLAIRAGE PAR LAMPES ET UNITÉ DE LAMPE

(30) Priority: 01.06.2016 JP 2016110161
(43) Date of publication of application: 10.04.2019
(73) Proprietor: Mitsuba Corporation, Kiryu-shi, Gunma 376-8555 (JP)
(72) Inventor: YANAGITA, Yuichi, Kiryu-shi Gunma 376-8555 (JP); ISHIDA, Masakatsu, Kiryu-shi Gunma 376-8555 (JP); KOBAYASHI, Kazuyuki, Kiryu-shi Gunma 376-8555 (JP)
(74) Representative: Cabinet Laurent & Charras
(86) International application number: PCT/JP2017/017833
(87) International publication number: WO 2017/208769

(56) References cited:
- EP-A1- 2 674 327
- EP-A1- 2 779 795
- WO-A1-2012/111574
- WO-A1-2012/132830
- JP-A- 2005 112 071
- JP-A- 2015 081 000
- JP-A- 2015 081 000

## Description

### TECHNICAL FIELD

The present invention relates to a lamp body lighting system and a lamp body unit.

### BACKGROUND

In the related art, a lamp body lighting system is known in which, when a turn signal switch that is provided on a vehicle is operated, a winker lamp (lamp body) that corresponds to a winker switch position of the turn signal switch starts blinking, and thereby, a proceeding direction of a vehicle is indicated externally. The lamp body is lighted by electric power from a battery that is provided on the vehicle.

A lamp body lighting system described in Patent Document 1 includes a breaking detection function of a line (hereinafter, referred to as a "lamp body line") that includes a lamp body. The lamp body lighting system described in Patent Document 1 includes a shunt resistance that is connected in series with the lamp body line. A voltage that corresponds to a current that flows through the lamp body line is generated at both ends of the shunt resistance. Accordingly, when the voltage between both ends of the shunt resistance becomes a threshold voltage or less, the lamp body lighting system is capable of determining that the lamp body line is broken and promptly notifying a user.

### [Related Art Documents]

### [Patent Documents]

[Patent Document 1] Japanese Unexamined Patent Application, First Publication No. 2005-112071

### SUMMARY OF INVENTION

### PROBLEMS TO BE SOLVED BY THE INVENTION

However, the output voltage of the battery is varied in response to the degradation of the battery or the travel state of the vehicle, and therefore, a value of current that flows through the lamp body line is also varied in response to the variation of the output voltage of the battery. Therefore, it is necessary to set a threshold voltage in accordance with the variation of the output voltage of the battery. Accordingly, when performing breaking detection of the lamp body line in the lamp body lighting system of the related art, it is necessary to add a function of setting a threshold voltage in accordance with the variation of the output voltage of the battery, and there may be cases in which the circuit scale is increased due to the complexity of control in setting the threshold voltage. The configuration provided in document JP 2015 081000 A is an example of solution in which the circuit scale is increased due to the complexity of control in setting the threshold voltage.

An object of an aspect of the present invention is to provide a lamp body lighting system and a lamp body unit capable of setting a threshold voltage regardless of the variation of an output voltage of a battery without increasing the size of the system.

### MEANS FOR SOLVING THE PROBLEM

A lamp body lighting system according to the present invention is as defined by claim 1. It is disclosed a lamp body lighting system including: a plurality of lamp bodies that are provided on a vehicle and that are connected in parallel with each other; a lamp body control apparatus that lights the lamp body by supplying a current to the lamp body from an electric source that is provided on the vehicle; and a constant current circuit that is connected in series with respect to the lamp body and that controls the current which flows through the lamp body to be constant.

In the lamp body lighting system described above, the plurality of lamp bodies and the constant current circuit may be provided inside a lamp body unit, the lamp body control apparatus may be provided outside the lamp body unit, and the constant current circuit may be connected in series with a current path of each of the plurality of lamp bodies.

In the lamp body lighting system described above, the lamp body control apparatus includes a breaking detection part that detects a breaking of each of the plurality of lamp bodies, and the breaking detection part may include: a shunt resistance that is provided on a current path which supplies a current to the lamp body from the electric source; and a breaking determination section which determines that the lamp body is broken when a potential difference between both ends of the shunt resistance is less than a predetermined threshold value.

In the lamp body lighting system described above, a voltage-current characteristic that is output from the electric source may include a stable zone in which the current is constant even when a voltage that is output from the electric source is varied.

In the lamp body lighting system described above, the lamp bodies may be two turn signal lamps which are connected in parallel with each other, one of which is arranged at a frontward part of the vehicle, and another of which is arranged at a rearward part of the vehicle, and the threshold value may be set based on a value of current in the stable zone between a value of current that is output from the electric source when only any one of the two turn signal lamps is lighted and a value of current that is output from the electric source when both of the two turn signal lamps are lighted.

A lamp body unit includes: a plurality of lamp bodies that are provided on a vehicle and that are connected in parallel with each other; and a plurality of constant current circuits, wherein the plurality of constant current circuits are provided inside the lamp body unit, and each of the plurality of constant current circuits is connected in series with a current path of each of the plurality of lamp bodies and controls a value of current that flows through the current path to be constant.

### ADVANTAGE OF THE INVENTION

As described above, according to an aspect of the present invention, it is possible to provide a lamp body lighting system and a lamp body unit capable of setting a threshold voltage regardless of the variation of an output voltage of a battery without increasing the size of the system.

### BRIEF DESCRIPTION OF THE DRAWINGS

FIG. 1 is a top view schematically showing a motorcycle that includes a lamp body lighting system in an embodiment.
FIG. 2 is a view showing an example of a schematic configuration of the lamp body lighting system in the embodiment.
FIG. 3 is a view showing an example of a schematic configuration of a breaking detection part in the embodiment.
FIG. 4 is a view showing a setting method of a threshold voltage in the embodiment.
FIG. 5 is a view showing a configuration of a lamp body lighting system of the related art.
FIG. 6 is a view showing a setting method of a threshold voltage of the related art.
FIG. 7 is a view showing a configuration in which a constant current circuit is provided in the configuration of the lamp body lighting system of the related art.
FIG. 8 is a view showing a voltage-current characteristic that is output from an electric source in the configuration shown in FIG. 7.

### DESCRIPTION OF THE EMBODIMENTS

Hereinafter, an embodiment of the present invention is described, but the following embodiment does not limit the invention according to claims. Further, all of the combinations of features described in the embodiment are not necessarily indispensable for solving the problem addressed by the invention. In the drawings, the same reference numerals may be given to the same or similar parts, and redundant descriptions may be omitted.

Hereinafter, a lamp body lighting system 1 of an embodiment is described with reference to the drawings.

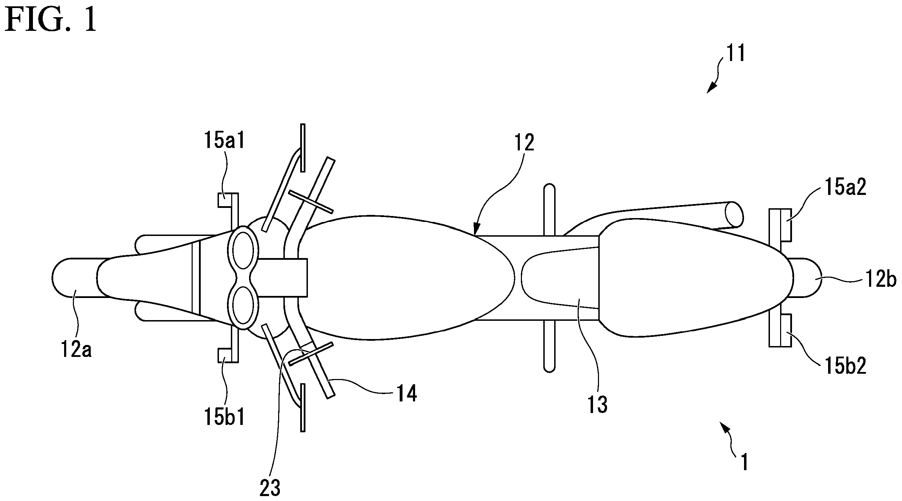

FIG. 1 is a top view schematically showing a motorcycle that includes the lamp body lighting system 1 in the present embodiment. As shown in FIG. 1, a front wheel 12a and a rear wheel 12b are provided on a vehicle body 12 of a motorcycle 11 as a vehicle. A driver who is seated on a seat 13 that is provided on a middle part of the vehicle body 12 operates a handle 14 and allows the motorcycle 11 to travel.

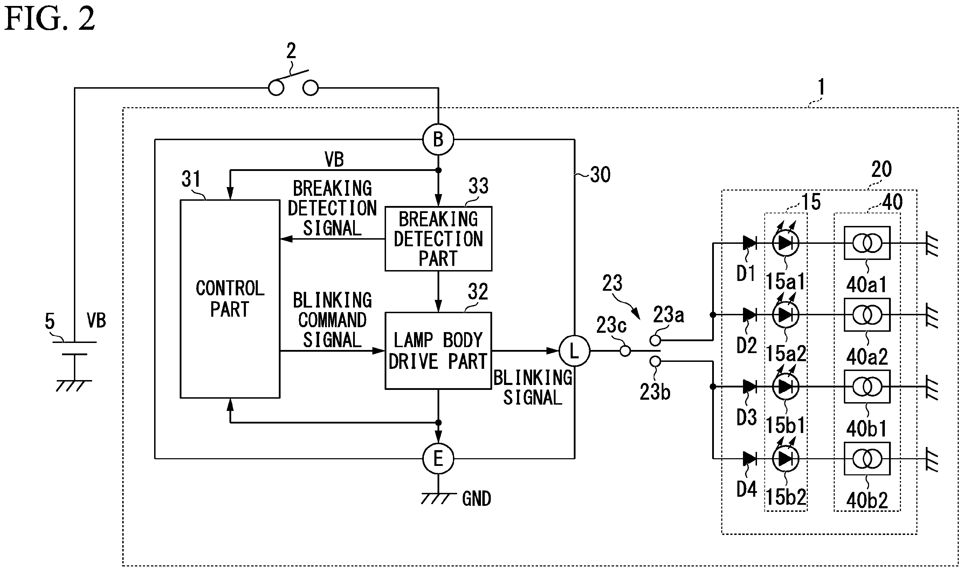

FIG. 2 is a view showing an example of a schematic configuration of the lamp body lighting system 1 in the present embodiment. As shown in FIG. 1 and FIG. 2, the lamp body lighting system 1 includes a lamp body unit 20, a display switch 23, and a lamp body control apparatus 30.

As shown in FIG. 2, the lamp body unit 20 includes a plurality of diodes D1 to D4, a plurality of lamp bodies 15, and a plurality of constant current circuits 40. The plurality of diodes D1 to D4, the plurality of lamp bodies 15, and the plurality of constant current circuits 40 are provided inside the lamp body unit 20. The lamp body control apparatus 30 is provided outside the lamp body unit 20. The lamp body unit 20 is connected to the lamp body control apparatus 30 via the display switch 23.

As shown in FIG. 1 and FIG. 2, a right turn signal lamp 15a1 as the lamp body 15 is provided on the right side of a frontward part of the vehicle body 12, and a right turn signal lamp 15a2 as the lamp body 15 is provided on the right side of a rearward part of the vehicle body 12. In the present embodiment, the turn signal lamp 15a1 is a front lamp body on the right side of the vehicle body 12. The turn signal lamp 15a2 is a rear lamp body on the right side of the vehicle body 12.

Further, a left turn signal lamp 15b1 as the lamp body 15 is provided on the left side of a frontward part of the vehicle body 12, and a left turn signal lamp 15b2 as the lamp body 15 is provided on the left side of a rearward part of the vehicle body 12. In the present embodiment, the turn signal lamp 15b1 is a front lamp body on the left side of the vehicle body 12. The turn signal lamp 15b2 is a rear lamp body on the left side of the vehicle body 12. For example, the lamp body 15 is an LED (Light-Emitting Diode). In the present embodiment, all of the plurality of lamp bodies 15 are LEDs having the same characteristic.

The two right turn signal lamps 15a1, 15a2 are connected in parallel with each other. One of the two right turn signal lamps 15a1, 15a2 is arranged at a frontward position of the vehicle body 12. Another of the two right turn signal lamps 15a1, 15a2 is arranged at a rearward position of the vehicle body 12. The two left turn signal lamps 15b1, 15b2 are connected in parallel with each other. One of the two left turn signal lamps 15b1, 15b2 is arranged at a frontward position of the vehicle body 12. Another of the two left turn signal lamps 15b1, 15b2 is arranged at a rearward position of the vehicle body 12. In the following description, the turn signal lamps 15a1, 15a2 may be collectively referred to as a turn signal lamp 15a. The turn signal lamps 15b1, 15b2 may be collectively referred to as a turn signal lamp 15b.

The plurality of constant current circuits 40 (40a1, 40a2, 40b1, 40b2) are connected in series with respect to the lamp body 15 and control a current that flows through the lamp body 15 to be constant. In the present embodiment, the constant current circuit 40 is connected in series with a current path of each of the plurality of lamp bodies 15.

Specifically, the constant current circuit 40a1 is connected in series with a lamp body 15a1. The constant current circuit 40a2 is connected in series with a lamp body 15a2. The constant current circuit 40a1 and the constant current circuit 40a2 are connected in parallel with each other. Accordingly, the constant current circuit 40a1 controls a value of current that flows through the turn signal lamp 15a1 to be constant. The constant current circuit 40a2 controls a value of current that flows through the turn signal lamp 15a2 to be constant.

The constant current circuit 40b1 is connected in series with a lamp body 15b1. The constant current circuit 40b2 is connected in series with a lamp body 15b2. The constant current circuit 40b1 and the constant current circuit 40b2 are connected in parallel with each other. Accordingly, the constant current circuit 40b1 controls a value of current that flows through the turn signal lamp 15b1 to be constant. The constant current circuit 40b2 controls a value of current that flows through the turn signal lamp 15b2 to be constant.

In the present embodiment, the plurality of constant current circuits 40 are the same constant current circuits. That is, the plurality of constant current circuits 40 perform a control such that a value of current that flows through the current path in which each constant current circuit 40 is provided becomes the same current value Iv.

Each of the plurality of diodes D1 to D4 is connected in series with the current path of each of the plurality of lamp bodies 15. Each of the plurality of diodes D1 to D4 prevents a flowback of a current that flows through the current path to which each of the plurality of diodes D1 to D4 is connected.

As shown in FIG. 1, the display switch 23 is arranged on a part of the handle 14 of the vehicle body 12 to be operable from the outside of the motorcycle 11.

By a driver operating the display switch 23, it is possible to allow any one of the right turn signal lamp 15a and the left turn signal lamp 15b to perform a blinking display, that is, to perform a turn signal display (T/S display), and it is possible to notify another vehicle and the like of a proceeding direction of the motorcycle 11. That is, the display switch 23 is a turn signal switch for allowing any one of the right turn signal lamp 15a and the left turn signal lamp 15b to perform a blinking display, that is, to perform a T/S display.

As shown in FIG. 2, for example, the display switch 23 includes a common connection point 23c that is connected to a drive output terminal L, a right connection point 23a that is connected to the right turn signal lamp 15a, and a left connection point 23b that is connected to the left turn signal lamp 15b. When the display switch 23 is switched on (operated) by an operation of the driver, the common connection point 23c is connected selectively to any one of the right connection point 23a and the left connection point 23b. When the display switch 23 is switched on, that is, when the display switch is turned on, any one of the right turn signal lamp 15a and the left turn signal lamp 15b is connected to the drive output terminal L. Then, the right turn signal lamp 15a or the left turn signal lamp 15b that is connected to the drive output terminal L is blinked on the basis of a blinking signal that is output from the lamp body control apparatus 30. The display switch 23 may include a hazard switch for allowing the right turn signal lamp 15a and the left turn signal lamp 15b to perform a blinking display simultaneously, that is, to perform a hazard display. That is, by the driver switching on the display switch 23, the right turn signal lamp 15a and the left turn signal lamp 15b are allowed to perform a blinking display simultaneously, that is, to perform a hazard display, and thereby, the driver may notify another vehicle and the like of an emergency stopping on a road due to a failure and the like.

As shown in FIG. 2, a drive electric source terminal B and the drive output terminal L are provided on the lamp body control apparatus 30. The drive electric source terminal B is connected to an electric source 5 that is provided on the vehicle body 12. For example, the electric source 5 is a battery. The lamp body control apparatus 30 supplies a current to each lamp body 15 from the electric source 5 that is provided on the vehicle body 12 and thereby lights the lamp body 15. In the present embodiment, by the driver switching on an ignition switch 2, an engine (not shown) of the motorcycle 11 is started, and it is possible to supply a voltage VB of the electric source 5 to the lamp body control apparatus 30 via the drive electric source terminal B. The voltage VB that is supplied to the drive electric source terminal B via the ignition switch 2 from the electric source 5 is output as a blinking signal that blinks the lamp body 15 from the drive output terminal L. That is, when the display switch 23 is turned on, the lamp body control apparatus 30 outputs the blinking signal from the drive output terminal L so as to allow at least one of the turn signal lamp 15a and the turn signal lamp 15b to perform a blinking display.

As shown in FIG. 2, the lamp body control apparatus 30 includes a control part 31, a lamp body drive part 32, and a breaking detection part 33.

When the voltage VB of the electric source 5 is supplied via the drive electric source terminal B by the ignition switch 2 being operated to be in an ON state, the control part 31 outputs a blinking command signal that commands a timing of the blinking (hereinafter, referred to as a "blinking timing") of the lamp body 15 to the lamp body drive part 32. For example, the blinking command signal is a High-Low binarized signal.

When the ignition switch 2 is operated to be in an ON state, the voltage VB is supplied to the lamp body drive part 32 from the electric source 5 via the breaking detection part 33. The lamp body drive part 32 generates a blinking signal that allows the lamp body 15 to blink from the voltage VB on the basis of the blinking command signal that is output from the control part 31. Then, the lamp body drive part 32 outputs the generated blinking signal from the drive output terminal L. For example, the blinking signal is a signal that repeats High (for example, the voltage VB) and Low (for example, 0V) at a constant cycle in response to the blinking timing that is commanded by the blinking command signal. Thereby, the blinking signal is supplied to the lamp body 15 via the display switch 23 that is connected to the drive output terminal L. Thereby, the lamp body 15 blinks at a constant cycle on the basis of the blinking signal that is supplied from the lamp body drive part 32. For example, the lamp body drive part 32 is a voltage conversion circuit by which a voltage is converted to an output voltage for allowing the lamp body 15 to be lighted or a current amplifier circuit by which a current is amplified to a current that is required for allowing the lamp body 15 to be lighted.

The breaking detection part 33 detects a breaking of each of the plurality of lamp bodies 15. When detecting the breaking of the lamp body 15, the breaking detection part 33 outputs a breaking detection signal that indicates the breaking of the lamp body 15 of which the breaking is detected to the control part 31. In the present embodiment, the breaking detection part 33 is connected to and between the drive electric source terminal B and the lamp body drive part 32; however, the embodiment is not limited thereto. For example, the breaking detection part 33 may be connected to and between the lamp body drive part 32 and the drive output terminal L. That is, the breaking detection part 33 may be connected to a current path of a current that flows to the lamp body 15 from the electric source 5 inside the lamp body control apparatus 30.

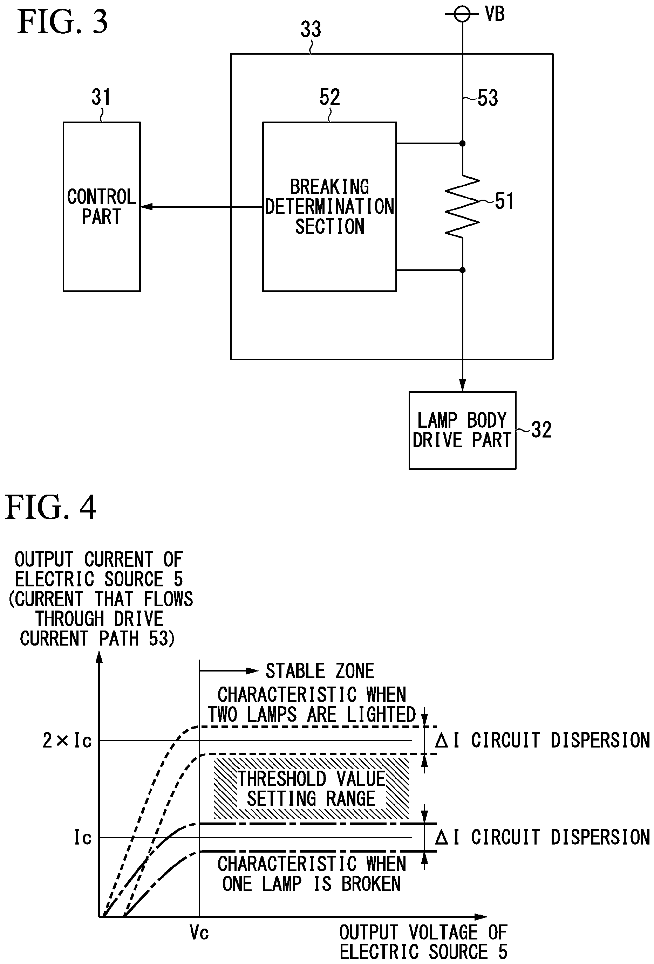

FIG. 3 is a view showing an example of a schematic configuration of the breaking detection part 33 in the present embodiment.

As shown in FIG. 3, the breaking detection part 33 includes a shunt resistance 51 and a breaking determination section 52.

The shunt resistance 51 is provided in a current path that supplies a current to the lamp body 15 from the electric source 5. In the present embodiment, the shunt resistance 51 is connected to a drive current path 53 of a current that flows to the lamp body drive part 32 from the drive electric source terminal B.

For example, when the display switch 23 is turned on, any one of the right turn signal lamp 15a and the left turn signal lamp 15b is connected to the drive output terminal L. Then, a current is supplied from the electric source 5 to the right turn signal lamp 15a and the left turn signal lamp 15b that is connected to the drive output terminal L on the basis of the blinking signal that is output from the lamp body control apparatus 30. For example, when the display switch 23 is turned on, and the turn signal lamp 15a is electrically connected to the drive output terminal L (the common connection point 23c and the right connection point 23a are connected to each other), a current of a constant value (Iv) is supplied from the electric source 5 to each of the turn signal lamp 15a1 to which the constant current circuit 40a1 is connected and the turn signal lamp 15a2 to which the constant current circuit 40a2 is connected. On the other hand, when the display switch 23 is turned on, and the turn signal lamp 15b is electrically connected to the drive output terminal L (the common connection point 23c and the left connection point 23b are connected to each other), a current of a constant value (Iv) is supplied from the electric source 5 to each of the turn signal lamp 15bl to which the constant current circuit 40b1 is connected and the turn signal lamp 15b2 to which the constant current circuit 40b2 is connected.

When a current having a current value Iv flows through one of the lamp bodies 15, a current having the same current value Iv flows toward the lamp body drive part 32 through the drive current path 53. Accordingly, when the display switch 23 is turned on, a current having a current value that is twice as much as the current value Iv flows through the drive current path 53. Accordingly, a voltage (potential difference) that corresponds to the current having a current value that is twice as much as the current value Iv is generated between both ends of the shunt resistance 51.

Hereinafter, the voltage that is generated between both ends of the shunt resistance 51 is referred to as a voltage Vd between both ends.

The breaking determination section 52 determines that the lamp body 15 is broken when the voltage Vd between both ends of the shunt resistance 51 becomes less than a threshold voltage Vth. When it is determined that the lamp body 15 is broken, the breaking determination section 52 outputs the breaking detection signal to the control part 31.

Hereinafter, a setting method of the threshold voltage Vth in the present embodiment is described.

FIG. 4 is a view showing a setting method of the threshold voltage Vth in the present embodiment.

For example, when the display switch 23 is turned on, and the common connection point 23c is connected to the right connection point 23a, the turn signal lamp 15a is electrically connected to the drive output terminal L, and therefore, a current having a current value Iv flows through each of the turn signal lamps 15a1, 15a2. Accordingly, a current having a current value that is twice as much as the current value Iv flows through the drive current path 53. For example, when the turn signal lamp 15a1 is broken, a current having a current value Iv flows only through the turn signal lamp 15a2, and therefore, only the current having the current value Iv flows through the drive current path 53. Each of the constant current circuits 40a1, 40a2 is connected to each of the turn signal lamps 15a1, 15a2. Accordingly, as shown in FIG. 4, a voltage-current characteristic that is output from the electric source 5 includes a stable zone in which a current that is output from the electric source 5 is constant even when a voltage VB that is output from the electric source 5 is varied. In the present embodiment, the available voltage of the electric source 5 in the vehicle is a voltage value Vc. Therefore, the threshold voltage Vth that is used for the determination of the breaking of the lamp body 15 can be set based on a current value Ith in the stable zone between a value of current that is output from the electric source 5 when only any one of the two turn signal lamps 15a1, 15a2 is lighted and a value of current that is output from the electric source 5 when both of the two turn signal lamps 15a1, 15a2 are lighted. That is, the threshold voltage Vth becomes the current value Ith multiplied by the resistance value Rth of the shunt resistance 51. The threshold voltage Vth is a value of output voltage within the threshold value-setting range shown in FIG. 4. In this way, it is possible to set a predetermined threshold voltage Vth regardless of the variation of the output voltage of the electric source 5. As shown in FIG. 4, the threshold voltage Vth is set in consideration of the variation amount ΔI of the current value caused by the circuit dispersion of the lamp body control apparatus 30. Even in a breaking detection when the turn signal lamp 15b is electrically connected to the drive output terminal L, by using the threshold voltage Vth that is set according to the method described above, it is possible to perform the breaking detection of the turn signal lamp 15b.

Hereinafter, the effect of the lamp body lighting system 1 in the present embodiment is described.

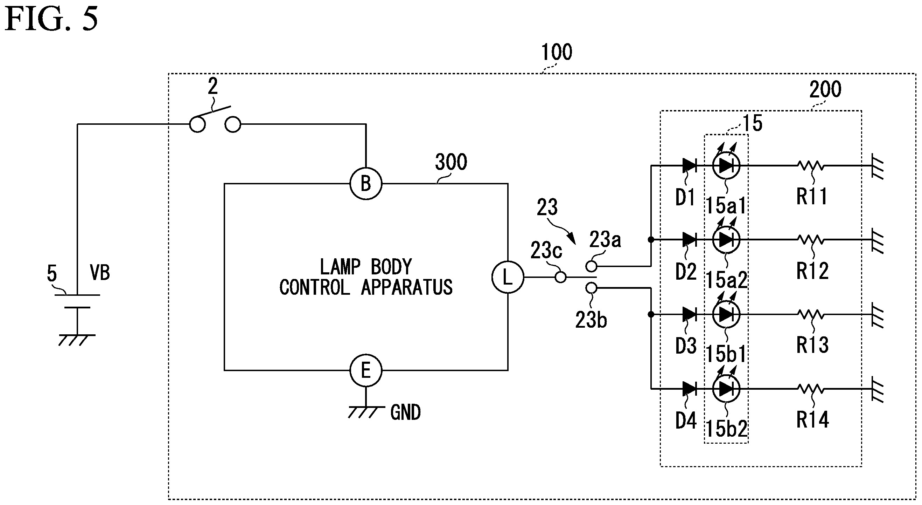

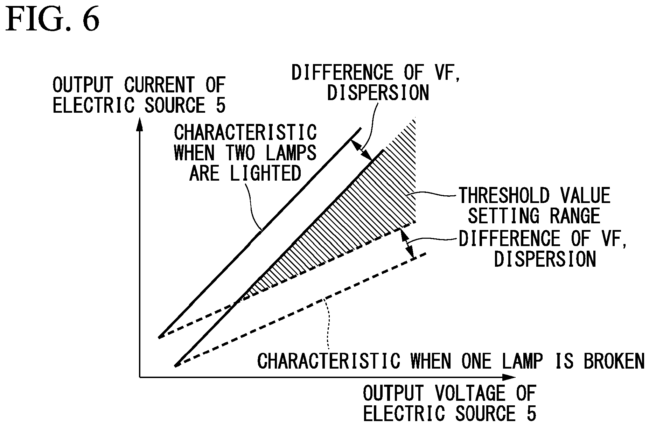

FIG. 5 is a view showing a configuration of a lamp body lighting system 100 of the related art. FIG. 6 is a view showing a setting method of a threshold voltage Vth of the related art.

The lamp body lighting system 100 of the related art includes a lamp body unit 200, the display switch 23, and a lamp body control apparatus 300.

The lamp body unit 20 includes the plurality of diodes D1 to D4, the plurality of lamp bodies 15, and a plurality of resistances R11 to R14.

The resistances R11 to R14 are current limitation resistances that control a current which flows through the lamp body 15.

The resistance R11 is connected in series with the turn signal lamp 15a1. The resistance R11 limits a current which flows through the turn signal lamp 15a1. The resistance R12 is connected in series with the turn signal lamp 15a2. The resistance R12 limits a current which flows through the turn signal lamp 15a2. The resistance R13 is connected in series with the turn signal lamp 15b1. The resistance R13 limits a current which flows through the turn signal lamp 15b1. The resistance R14 is connected in series with the turn signal lamp 15b2. The resistance R14 limits a current which flows through the turn signal lamp 15b2.

The drive electric source terminal B and the drive output terminal L are provided on the lamp body control apparatus 300. The drive electric source terminal B is connected to the electric source 5 that is provided on the vehicle. By switching on the ignition switch 2, the lamp body control apparatus 300 supplies a current to each lamp body 15 from the electric source 5 that is provided on the vehicle and thereby lights the lamp body 15. In the lamp body lighting system 100 of the related art, a voltage-current characteristic that is output from the electric source 5 has a characteristic in which the output current is changed depending on the output voltage as shown in FIG. 6. That is, in the lamp body lighting system 100, when the lamp body 15 is driven by the electric source 5, the value of current that flows through the lamp body 15 is varied by the output voltage. Accordingly, when it is detected, based on the current value change, that any one of two lamp bodies (for example, turn signal lamps 15a1, 15a2), one of which is arranged at a vehicle frontward part, and another of which is arranged at a vehicle rearward part, is broken, it is necessary for the lamp body control apparatus 300 to map and store in advance a threshold value (a threshold voltage Vth or a threshold current Ith) that is detected depending on the output voltage of the electric source 5 and change the threshold value in real time in accordance with an actual output voltage of the electric source 5. Further, as shown in FIG. 6, between when two lamps are lighted and when one lamp is lighted, a difference in the slope of the output current (the value of current that flows through the lamp body 15) to the output voltage of the electric source 5 occurs by the characteristic of a forward voltage VF of the lamp body 15. Accordingly, an available electric source voltage range of the electric source 5 is narrowed. Further, since the threshold voltage Vth is tuned to the threshold value-setting range shown in FIG. 6, a consideration in which the slope by threshold voltage Vth is also changed in accordance with the threshold value-setting range and the like are required, and the control becomes complicated. The circuit scale is increased associated with the complication of control, and the number of circuit characteristic dispersion elements is increased due to the circuit scale increase. As a result, there is a possibility that the setting range of the threshold value may be narrowed, and the degree of freedom for the system architecture may be narrowed.

On the other hand, the lamp body lighting system 1 in the present embodiment includes the constant current circuit 40 that is connected in series with respect to the lamp body 15 and that controls the current which flows through the lamp body 15 to be constant. Accordingly, the voltage-current characteristic that is output from the electric source 5 in the present embodiment includes the stable zone in which the current that is output from the electric source 5 is constant even when the voltage VB that is output from the electric source 5 is varied. Thereby, it becomes unnecessary to map the threshold value by the electric source voltage, and it is possible to set the threshold voltage Vth regardless of the variation of the output voltage of the electric source 5. Further, the threshold value-setting range is enlarged compared to the lamp body lighting system of the related art, and the degree of freedom of control is improved.

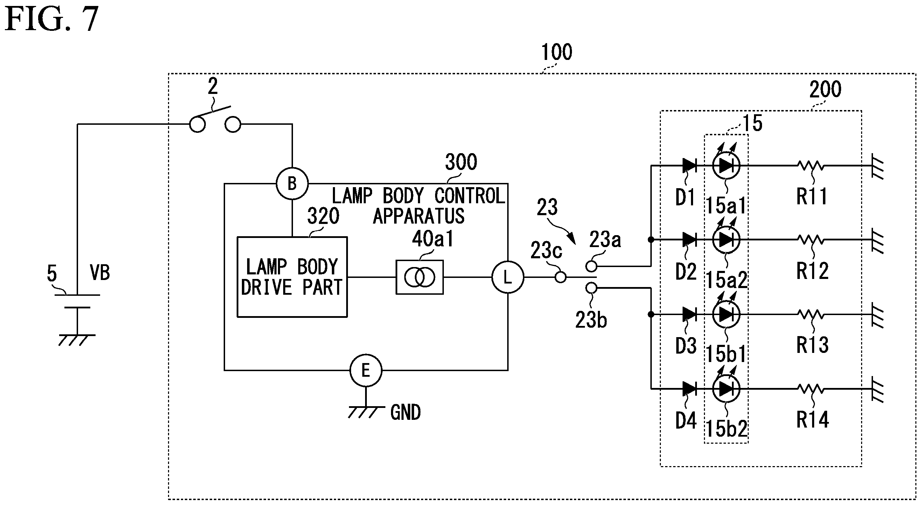

FIG. 7 is a view showing a configuration in which a constant current circuit 40a1 is provided in the configuration of the lamp body lighting system 100 of the related art. The lamp body lighting system 100 includes a lamp body drive part 320 that lights the lamp body 15 by supplying a current to each lamp body 15 via the drive output terminal L from the electric source 5 that is provided on the vehicle. As shown in FIG. 7, in the lamp body lighting system 100, it is conceivable that the constant current circuit 40a1 be provided between the lamp body drive part 320 and the drive output terminal L in order to stabilize the current that flows through the lamp body 15.

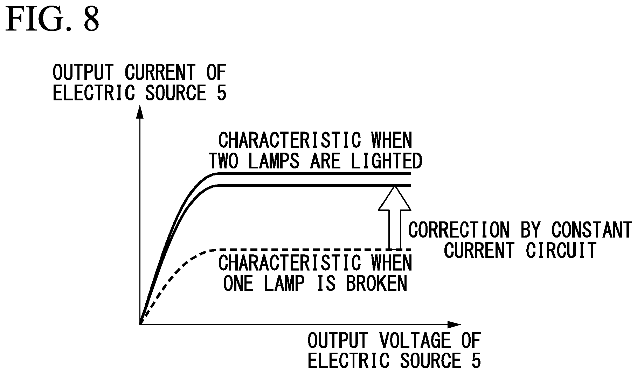

In the configuration shown in FIG. 7, when one lamp is broken in a case where the common connection point 23c and the right connection point 23a are connected to each other, the constant current circuit 40a1 performs a control such that the current which flows through the lamp body 15 is kept constant. Accordingly, as shown in FIG. 8, the voltage-current characteristic that is output from the electric source 5 when two lamps are lighted and the voltage-current characteristic that is output from the electric source 5 when one lamp is lighted have the same characteristic. Therefore, it is impossible for the lamp body control apparatus 300 to distinguish between a state in which the lamp body 15 is broken and a normal state in which the lamp body 15 is not broken. Further, in this configuration, since it is necessary to provide the lamp body drive part 320 and the breaking detection circuit on the lamp body control apparatus 300 for each of the plurality of lamp bodies 15 in order to perform a breaking detection, and the circuit scale of the lamp body control apparatus 300 is increased, a system size (the size of the lamp body control apparatus 300) is increased, and the cost becomes high.

On the other hand, aiming at enlarging the threshold value used for the breaking detection of the lamp body 15, the lamp body lighting system 1 in the present embodiment includes a configuration in which the constant current circuit 40 is connected in series with the current path of each of the plurality of lamp bodies 15. Accordingly, it is possible for the lamp body control apparatus 30 to easily distinguish between a state in which the lamp body 15 is broken and a normal state in which the lamp body 15 is not broken. Therefore, in the lamp body lighting system 1 in the present embodiment, it is not necessary to provide the breaking detection circuit on the lamp body control apparatus 30, and a system size (the size of the lamp body control apparatus 30) is not increased.

As described above, the lamp body lighting system 1 in the present embodiment includes: the plurality of lamp bodies 15 that are provided on the vehicle and that are connected in parallel with each other; the lamp body control apparatus 30 that lights the lamp body 15 by supplying a current to the lamp body 15 from the electric source that is provided on the vehicle; and the constant current circuit 40 that is connected in series with respect to the lamp body 15 and that controls the current which flows through the lamp body 15 to be constant. Thereby, it is possible to set the threshold voltage Vth that is used for the failure detection regardless of the variation of the output voltage of the electric source 5 (battery).

Each part of the lamp body control apparatus 30 may be realized by hardware, may be realized by software, or may be realized by the combination of hardware and software.

The lamp body control apparatus 30 in the embodiment described above may be realized by a computer. In that case, a program for realizing this function may be recorded in a computer-readable recording medium, and the program recorded in the recording medium may be read into and executed on a computer system to thereby realize the function. The term "computer system" used herein includes an OS or hardware such as peripherals. Further, the term "computer-readable recording medium" refers to portable media such as a flexible disk, a magneto-optical disc, a ROM, and a CD-ROM and a storage device such as a hard disk embedded in the computer system. Further, the term "computer-readable recording medium" may include a recording medium that holds a program dynamically for a short period of time like a network such as the Internet or a communication line when a program is transmitted through a communication line such as a telephone line and may include a recording medium that stores a program for a certain period of time like a volatile memory in a computer system which serves as a server or a client in that case. Further, the above program may be a program for realizing some of the functions described above, may be a program capable of realizing the above functions by the combination with a program already recorded in the computer system, or may be a program that is realized by using a programmable logic device such as a FPGA (Field-Programmable Gate Array).

### DESCRIPTION OF THE REFERENCE SYMBOLS

1: LAMP BODY LIGHTING SYSTEM
15: LAMP BODY
20: LAMP BODY UNIT
23: DISPLAY SWITCH
30: LAMP BODY CONTROL APPARATUS
31: CONTROL PART
32: LAMP BODY DRIVE PART
33: BREAKING DETECTION PART
40: CONSTANT CURRENT CIRCUIT

## Claims

1. A lamp body lighting system for a vehicle, comprising:
a lamp body unit (20) comprising :
a plurality of lamp bodies (15), each lamp body comprising two turn signal lamps (15a1, 15a2; 15a3, 15a4), which are connected in parallel with each other; and
a lamp body control apparatus (30) that is outside the lamp body unit (20) and that is configured to light the plurality of lamp bodies by supplying a current through a drive current path (53) to said lamp bodies, and that is further configured to receive a voltage (VB) from an electric source of the vehicle for supplying the current; the lamp body control apparatus (30) comprising a breaking detection part (33) configured to detect a breaking of each of the plurality of lamp bodies, and the breaking detection part (33) comprises:
a shunt resistance (51) provided in the drive current path which supplies the current to said plurality of lamp bodies; **characterized in that** the lamp body lighting system further comprises
a plurality of constant current circuits (40a1, 40a2; 40b1, 40b2), each constant current circuit being connected in series with a respective one of said turn signal lamps and each constant current circuit controlling the current flowing through the current path of its respective turn signal lamp to be constant;
a breaking determination section (52) that uses a predetermined threshold value to determine that one of the plurality of lamp bodies is broken when a potential difference between both terminals of the shunt resistance is less than the predetermined threshold value, whereby the predetermined threshold value is based on a value of current in a stable zone in which the current through the drive current path is constant even when the voltage (VB) received by the lamp body control apparatus varies, said value of current in the stable zone is between a value of current flowing through the drive current path that supplies the plurality of lamp bodies when only any one of the two turn signal lamps of a respective lamp body is lighted and a value of current flowing through the drive current path that supplies the plurality of lamp bodies when both of the two turn signal lamps of the respective lamp body are lighted.

## Patentansprüche

1. Ein Lampenbeleuchtungssystem für ein Fahrzeug, das umfasst:
eine Lampeneinheit (20) mit
mehreren: Lampen (15), wobei jede Lampe zwei Blinkleuchten (15al, 15a2, 15a3, 15a4) enthält, die parallel miteinander verbunden sind; und
eine Lampensteuervorrichtung (30), die sich außerhalb der Lampeneinheit (20) befindet und dazu konfiguriert ist, die verschiedenen Lampen zu beleuchten, indem sie über einen Versorgungsstrompfad (53) diesen Lampen einen Strom zuführen, und weiterhin dazu konfiguriert, Spannung (VB) von einer Stromquelle des Fahrzeugs, zur Zuführung des Stroms zu erhalten;
die Lampensteuervorrichtung (30) enthält ein Brucherkennungsteil (33), dazu konfiguriert, einen Bruch jeder einzelnen der verschiedenen Lampen zu erkennen, und das Brucherkennungsteil (33) enthält:
einen Shunt- Widerstand (51), vorgesehen im Versorgungsstrompfad, der den Strom zu diesen verschiedenen Lampen leitet, **dadurch gekennzeichnet, dass** das genannte Lampenbeleuchtungssystem außerdem mehrere Konstantstromkreise (40al, 40a2;
40b1, 40b2) enthält, wobei jeder Konstantstromkreis in Reihe mit jeweils einer der erwähnten Blinkleuchten geschaltet ist und jeder Konstantstromkreis den Strom, der durch den Strompfad der jeweiligen Blinkleuchte fließt, so steuert, dass er konstant ist;
ein Bruchbestimmungsabschnitt (52), bei dem ein vorher festgelegter Schwellenwert benutzt wird um festzustellen, ob eine der verschiedenen Lampen gebrochen ist, wenn die Potentialdifferenz zwischen beiden Terminals des Shunt - Widerstandes kleiner ist, als der vorher festgelegte Schwellenwert, wobei der vorher festgelegte Schwellenwert auf einem Strom in einer stabilen Zone basiert, in der der Strom durch den Versorgungsstrompfad konstant ist, auch wenn die der Lampensteuervorrichtung zugeführte Spannung (VB) schwankt,
dieser Stromwert in der stabilen Zone liegt zwischen dem Wert des Stromes, der durch den Versorgungsstrompfad der verschiedenen Lampen fließt, wenn nur eine der beiden Blinkleuchten der jeweiligen Lampe leuchtet und dem Wert des Stromes, der durch den Versorgungsstrompfad zur Versorgung der verschiedenen Lampen fließt, wenn beide Blinkleuchten der jeweiligen Lampe leuchten.

## Revendications

1. Système d'éclairage par corps de lampes destiné à un véhicule, comprenant une unité de corps de lampes (20) comprenant
une pluralité de corps de lampes (15), chaque corps de lampes comprenant deux lampes d'indication de direction (15a1, 15a2 ; 15a3, 15a4) qui sont connectées en parallèle l'une avec l'autre, et
un appareil de commande de corps de lampes (30) qui est à l'extérieur de l'unité de corps de lampes (20) et qui est configuré pour éclairer la pluralité de corps de lampes en transmettant à travers une ligne de courant moteur (53) un courant aux dits corps de lampes, et qui est en outre configuré pour recevoir une tension (VB) d'une source électrique du véhicule pour transmettre le courant, l'appareil de commande de corps de lampes (30) comprenant un élément de détection de brisement (33) configuré pour détecter un brisement de chacun de la pluralité de corps de lampes, l'élément de détection de brisement (33) comprenant une résistance de dérivation (51) disposée sur la ligne de courant moteur qui transmet le courant à ladite pluralité de corps de lampes, **caractérisé en ce que** ledit système d'éclairage par corps de lampes comprend en outre une pluralité de circuits de courant constant (40al, 40a2 ; 40bl, 40b2), chaque circuit de courant constant étant connecté en série avec une desdites lampes d'indication de direction et chaque circuit de courant constant contrôlant que le courant circulant à travers la ligne de courant de la lampe d'indication de direction correspondante est constant, et une section de détermination de brisement (52) qui utilise une valeur seuil prédéfinie pour déterminer qu'un de la pluralité des corps de lampes est brisé quand une différence de potentiel entre les deux bornes de la résistance de dérivation est inférieure à la valeur-seuil prédéfinie, la valeur-seuil prédéfinie étant basée sur une valeur de courant dans une zone stable dans laquelle le courant traversant la ligne de courant moteur est constant même quand la tension (VB) reçue par l'appareil de commande de corps de lampes varie, ladite valeur de courant dans la zone stable étant située entre une valeur de courant circulant à travers la ligne de courant moteur qui alimente la pluralité de corps de lampes quand seulement l'une ou l'autre des deux lampes d'indication de direction d'un corps de lampe donné est allumée et une valeur de courant circulant à travers la ligne de courant moteur qui alimente la pluralité de corps de lampe quand les deux lampes d'indication de direction du corps de lampe concerné sont allumées.
